(19) Europäisches Patentamt
European Patent Office
Office européen des brevets

(11) EP 4 772 549 A1

(12) EUROPEAN PATENT APPLICATION

(43) Date of publication:
**08.07.2026 Bulletin 2026/28**

(21) Application number: **25150381.9**

(22) Date of filing: **07.01.2025**

(51) International Patent Classification (IPC):
***C08F 210/16*** *(2006.01)* ***C08F 210/08*** *(2006.01)*
***C08F 4/6592*** *(2006.01)* ***C09J 123/08*** *(2006.01)*

(52) Cooperative Patent Classification (CPC):
(C-Sets available)
**C08F 210/16; C09J 123/0815;** C08F 4/65908;
C08F 2420/11 (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Borealis GmbH**
**1020 Vienna (AT)**

(72) Inventors:
- **CHENG, Joy**
  **4021 Linz (AT)**
- **TOULOUPIDIS, Vasileios**
  **4021 Linz (AT)**

(74) Representative: **Kador & Partner Part mbB**
**Corneliusstraße 15**
**80469 München (DE)**

(54) **ETHYLENE-1-BUTENE COPOLYMER**

(57) Ethylene-1-butene copolymers with an improved property profile, e.g. an improved balance of unsaturation levels, narrow molecular weight distribution, a low density and ultralow molecular weight. The invention further relates to a solution polymerization process using specific catalyst systems for preparing these ethylene-1-butene copolymers. The invention also relates to the use of these ethylene-1-octene copolymers for hot melt adhesive applications.

EP 4 772 549 A1

(52) Cooperative Patent Classification (CPC): (Cont.)

C-Sets
**C08F 210/16, C08F 4/65927;**
C08F 210/16, C08F 210/08, C08F 2500/08,
C08F 2500/12, C08F 2500/02, C08F 2500/03,
C08F 2500/27, C08F 2500/29

## Description

The present invention relates to an ethylene-1-butene copolymer with an improved property profile, e.g. an improved balance of unsaturation levels, narrow molecular weight distribution, a low density and ultralow molecular weight. The invention further relates to a solution polymerization process using specific catalyst systems for preparing these ethylene-1-butene copolymers. The invention also relates to the use of this ethylene-1-butene copolymer for hot melt adhesive applications.

## Background of the Invention

There have been many varieties of polyethylene polymers polymerized over the years, including those made using high pressure free radical chemistry (LDPE), more traditional linear low density polyethylene (LLDPE) typically made using Ziegler-Natta catalysis and metallocene or constrained geometry catalyzed polyethylene - some linear polyethylenes, but also some substantially linear polyethylene containing a slight amount of long chain branching. While these polymers have varying positives and negatives - depending on application or end-use - more control over the polymer structure is still desired.

Several ethylene based polymers, like ethylene vinyl acetate (EVA), low density polyethylene (LDPE) or ethylene-$\alpha$-olefin copolymers, are known to be suitable as base polymer for hot melt adhesives (HMAs).

HMAs are in principle composed of a polymer base resin as main component, optionally one or more tackifiers and/or plasticizers or waxes.

EVA is so far one of the most commonly used polymer base resin for hot melt adhesive applications. Besides its good performance, e.g. cohesive strength, flexibility, viscosity, filmability, this material however has quite some disadvantages, like the presence of vinyl acetate (VA) in the polymer structure, since the presence of VA monomers causes issues with odour, volatile and emissions.

In addition, due to high content of VA, the polarity of EVA copolymer increases. This can cause drastic reduction of compatibility between EVA and apolar waxes for hot melt adhesives (typically expressed as cloud point). A further disadvantage is the low level of moisture resistance (so low barrier property).

Hot melt adhesives comprised of polymers other than those incorporating vinyl acetate have also been disclosed in the prior art.

WO 2017/102702 A1 for example discloses a hot melt adhesive composition based on at least one metallocene catalyzed ethylene based plastomers being a copolymer of ethylene and a $C_4$ to $C_{10}$ alpha olefin with

(i) a density according to ISO 1183 in the range of 855 to 910 kg/m$^3$,
(ii) an $MFR_2$ according to ISO 1133 (190°C, 2.16kg) in the range of 55 to 100 g/10 min. According to the Working Examples an ethylene-1-octene copolymer is used.

The $MFR_2$ of this solution is quite low, as HMA applications normally prefer higher MFRs.

EP 0 912 646 A1 discloses hot melt adhesives based on homogeneous linear or substantially linear ethylene/$\alpha$-olefin interpolymers having a density from 0.850 g/cm$^3$ to 0.885 g/cm$^3$ and being produced with a constrained geometry catalyst composition.

According to the Working Examples an ethylene-1-octene copolymer is used.

US 5,530,054 A1 claims a hot melt adhesive composition consisting essentially of: (a) 30 percent to 70 percent by weight of a copolymer of ethylene and about 6 percent to about 30 percent by weight of a $C_3$ to $C_{20}$ $\alpha$-olefin produced in the presence of a catalyst composition comprising a metallocene and an alumoxane and having an Mw of from about 20 000 to about 100 000 g/mol; and (b) a hydrocarbon tackifier which is selected from a recited list.

Exemplified are compositions consisting of 45 weight percent of ethylene/butene-1 copolymer having a specific gravity of either 898 kg/m$^3$ or 901 kg/m$^3$.

US 2010/0276057 A1 furthermore discloses hot melt adhesives based on ethylene-1-butene copolymers made in a high pressure polymerization process using a free radical catalyst.

Thus, although a lot of development work has been done in the HMA field, there is still the need to provide improved solutions.

The inventors of the present invention have surprisingly found that certain novel metallocene catalyzed ethylene based plastomers with an improved property profile could be suitable for providing such improved hot melt adhesive solutions.

## Summary of the present inventions

Thus, the present invention is in a first aspect directed to an ethylene-1-butene-copolymer having

i) a density measured according to ISO1183 in the range of 860 to 890 kg/$m^3$,
ii) a melt flow rate, $MFR_2$, measured according to ISO1133 at 190°C and a load of 2.16 kg, in the range of 1000 to 2000 g/10 min,
iii) a molecular weight distribution, MWD, measured by Gel Permeation Chromatography, in the range of 1.5 to 3.0 and
iv) an unsaturation profile being characterized by

0.5 to 10.0 vinyl unsaturation units /100,000 C atoms measured by $^1$H-NMR as described in the experimental section,
20.0 to 50.0 vinylidene unsaturation units /100,000 C atoms measured by $^1$H-NMR as described in the experimental section,
50.0 to 100.0 vinylene unsaturation units /100,000 C atoms measured by $^1$H-NMR as described in the experimental section,
5.5 to 25.0 trisubstituted unsaturation units / 100,000 C atoms measured by $^1$H-NMR as described in the experimental section, and
76 to 185 total unsaturation units /100,000 C atoms, wherein the total unsaturation units/100,000 C atoms is the sum of vinyl unsaturation units /100,000 C atoms, vinylidene unsaturation units /100,000 C atoms, vinylene unsaturation units /100,000 C atoms and trisubstituted unsaturation units /100,000 C atoms, all measured by $^1$H-NMR as described in the experimental section.

In a second aspect, the invention is directed to a solution polymerization process for producing the above defined ethylene-1-butene copolymers using a metallocene complex of formula (I)

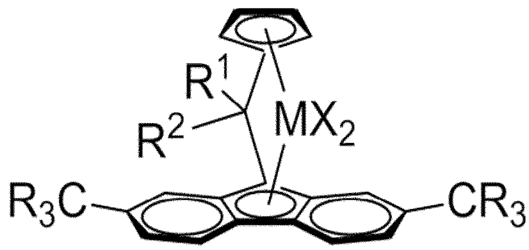

wherein

M is Hafnium,
R are the same or different from each other and can be a saturated linear or branched $C_1$ to $C_{1Q}$ alkyl, preferably all R are the same and are a linear or branched $C_1$ to $C_3$ alkyl, more preferably all R are a $C_1$ alkyl group,
$R^1$ is an unsubstituted $C_6$ to $C_{10}$ aryl, preferably phenyl and
$R^2$ is a $C_4$ to $C_{20}$ cycloalkyl group or a $C_4$ to $C_6$ alkenyl groups,
X is a $C_1$ to $C_6$ alkyl, preferably methyl,
and a cocatalyst.

In a third aspect, the invention is directed to the use of the above defined ethylene-1-butene copolymers as base resin for hot melt adhesives and hot melt adhesives comprising at least one ethylene-1-butene copolymer, as defined above.
*In the following the invention is described in more detail.*
The present invention provides ethylene-1-butene copolymers with an improved property profile, e.g. an improved balance of unsaturation levels, narrow molecular weight distribution, a low density and ultralow molecular weight.
The density of the ethylene-1-butene copolymers, measured according to ISO1183, is in the range of 860 to 890 kg/$m^3$, preferably 870 to 888 kg/$m^3$ and more preferably 875 to 885 kg/$m^3$.
The melt flow rate, $MFR_2$, measured according to ISO1133 at 190°C and a load of 2.16 kg, is in the range of 1000 to 2000 g/10 min, preferably 1100 to 1800 g/10 min and more preferably 1200 to 1500 g/10 min.
The molecular weight distribution, MWD, measured by Gel Permeation Chromatography, is in the range of 1.5 to 3.0, preferably 1.8 to 2.8 and more preferably 1.9 to 2.6.
Ethylene1-butene copolymers according to the present invention have an unsaturation profile being characterized by

0.5 to 10.0, preferably 1.0 to 8.0, more preferably 1.5 to 5.0 vinyl unsaturation units /100,000 C atoms measured by $^1$H-

NMR as described in the experimental section,
20.0 to 50.0, preferably 25.0 to 45.0, more preferably 28.0 to 40.0 vinylidene unsaturation units /100,000 C atoms measured by $^1$H-NMR as described in the experimental section,
50.0 to 100.0, preferably 55.0 to 90.0, more preferably 60.0 to 80.0 vinylene unsaturation units /100,000 C atoms measured by $^1$H-NMR as described in the experimental section,
5.5 to 25.0, preferably 8.0 to 22.0, more preferably 10.0 to 20.0 trisubstituted unsaturation units / 100,000 C atoms measured by $^1$H-NMR as described in the experimental section, and
76 to 185, preferably 88 to 155 and more preferably 99.5 to 145.0 total unsaturation units /100,000 C atoms, wherein the total unsaturation units /100,000 C atoms is the sum of vinyl unsaturation units /100,000 C atoms, vinylidene unsaturation units /100,000 C atoms, vinylene unsaturation units /100,000 C atoms and trisubstituted unsaturation units /100,000 C atoms, all measured by $^1$H-NMR as described in the experimental section.

Such ethylene-1-butene copolymers have a comonomer content, i.e. 1-butene content in the range of 10.0 to 35.0 wt%, preferably 15.0 to 30.0 wt.% and more preferably 18.0 to 26.0 wt%.

In a preferred embodiment the ethylene-1-butene copolymers according to the present invention have

a number average molecular weight (Mn), determined by Gel Permeation Chromatography, of below 10000 g/mol, preferably in the range of 4000 to 9500 g/mol, more preferably in the range of 5000 to 8000 g/mol and/or
a weight average molecular weight (Mw) determined by Gel Permeation Chromatography in a range of 10000 to 25000 g/mol, preferably 12000 to 22000 g/mol, and more preferably 13000 to 20000 g/mol.

In a further embodiment the ethylene-1-butene copolymers according to the present invention have a ratio Mz/Mw in the range of 2.2 to 4.5, preferably 2.5 to 4.0 and more preferably 2.8 to 3.8, Mz and Mw being determined by Gel Permeation Chromatography.

In another embodiment the ethylene-1-butene copolymers according to the present invention may have a Full Width at Half maximum (FWHM) of the crystallization peak measured according to ISO 11357-3 in the range of 30 to 80°C, preferably 40 to 70°C and more preferably 45 to 60°C.

Alternatively the ethylene-1-butene copolymers according to the present invention may have a chemical composition distribution (CCD) characterized by a Peak width at 10% of Peak maximum (PWPM), determined as described in the experimental section, in the range of 10 to 30°C, preferably 12 to 25°C and more preferably 15 to 20°C.

The present invention is furthermore directed to a solution polymerization process for producing the above defined ethylene-1-butene copolymers using a metallocene complex of formula (I)

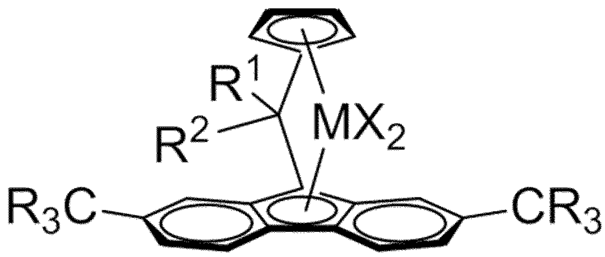

wherein

M is Hafnium,
R are the same or different from each other and can be a saturated linear or branched $C_1$ to $C_{10}$ alkyl, preferably all R are the same and are a linear or branched $C_1$ to $C_3$ alkyl, more preferably all R are a $C_1$ alkyl group,
$R^1$ is an unsubstituted $C_6$ to $C_{10}$ aryl, preferably phenyl and
$R^2$ is a $C_4$ to $C_{20}$ cycloalkyl group or a $C_4$ to $C_6$ alkenyl groups,
X is a $C_1$ to $C_6$ alkyl, preferably methyl,
and a cocatalyst.

The used solution polymerization process is a high temperature solution polymerization process, using a polymerization temperature of higher than 100°C. Preferably the polymerization temperature is at least 110°C, more preferably at least 140°C. The polymerization temperature can be up to 250°C.

The pressure in the reactor depends on the temperature, on one hand, and the type and the amount of the comonomer, on the other hand. The pressure is suitably from 50 to 300 bar, preferably from 60 to 250 bar and more preferably from 70 to 200 bar.

The process includes one or more polymerization reactors, like 1, 2 or 3 or more reactors, preferably one or two reactors. Suitable reactors include unstirred or stirred, spherical, cylindrical and tank-like vessels and recirculating loop reactors and tubular reactors. Such reactors typically include feeding points for monomer, optional comonomer, solvent, catalyst and optional other reactants and additives and withdrawal points for polymer solutions. In addition, the reactors may include heating or cooling means.

The hydrocarbon solvent used is preferably a $C_{5-12}$-hydrocarbon which may be unsubstituted or substituted by $C_{1-4}$ alkyl group such as pentane, methyl pentane, hexane, heptane, octane, cyclohexane, methylcyclohexane and hydrogenated naphtha. More preferably, unsubstituted $C_{6-10}$-hydrocarbon solvents are used.

In addition, other components may be added into the reactor. It is known to feed hydrogen into the reactor for controlling the molecular weight of the polymer formed during the polymerization. The use of different antifouling compounds is also already known in the art. In addition, different kinds of activity boosters or activity retarders may be used for controlling the activity of the catalyst.

A preferred process for the preparation of the copolymer according to the invention is a high temperature solution process as described above, preferably at a temperature greater than 100°C, in the presence of a metallocene catalyst system, the metallocene catalyst system comprising, or consisting of,

(i) at least one metallocene complex of formula (I), as described above,
(ii) an aluminoxane cocatalyst and/or an boron containing cocatalyst, and
(iii) optionally an aluminium alkyl compound $Al(R^6)_3$, with $R^6$ being a linear or branched $C_2$-Cs-alkyl group.

Preferably, the at least one metallocene complex of formula (I) is a metallocene complex of formula (Ia)

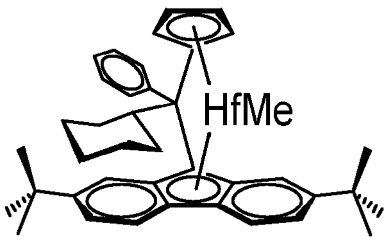

(Ia)

((Phenyl)(cyclohexyl)methylene(cyclopentadienyl)(2,7-di-tert-butylfluoren-9-yl)hafnium dimethyl),
or the at least one metallocene complex of formula (I) is a metallocene complex of formula (Ib)

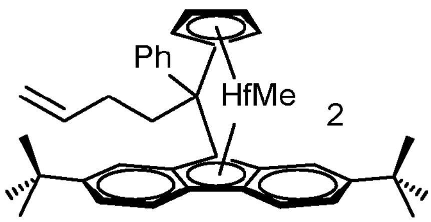

(Ia)

((Phenyl)(3-buten-1-yl)methylene(cyclopentadienyl) (2,7-di-tert-butylfluoren-9-yl) hafnium dimethyl),

Most preferably (Phenyl)(cyclohexyl)methylene(cyclopentadienyl)(2,7-di-tert-butylfluoren-9-yl)hafnium dimethyl) is used as metallocene complex (i).

The above mentioned metallocene complexes of formulae (I), (Ia) and (Ib) and their preparation are described in more detail in WO2018108917 and WO2018108918.

As cocatalyst (ii) either an aluminoxane or a boron containing cocatalyst or mixtures therefrom can be used.

The aluminoxane cocatalyst can be one of formula (II)

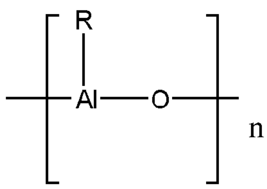

(II)

where n is from 6 to 20 and R has the meaning below.

Aluminoxanes are formed on partial hydrolysis of organoaluminum compounds, for example those of the formula $AlR_3$, $AlR_2Y$ and $Al_2R_3Y_3$ where R can be, for example, $C_1$-$C_{10}$-alkyl, preferably $C_1$-$C_5$-alkyl, or $C_3$-$C_{10}$-cycloalkyl, $C_7$-$C_{12}$-arylalkyl or -alkylaryl and/or phenyl or naphthyl, and where Y can be hydrogen, halogen, preferably chlorine or bromine, or $C_1$-$C_{10}$-alkoxy, preferably methoxy or ethoxy. The resulting oxygen-containing aluminoxanes are not in general pure compounds but mixtures of oligomers of the formula (II).

The preferred aluminoxane is methylaluminoxane (MAO).

Since the aluminoxanes used according to the invention as cocatalysts are not, owing to their mode of preparation, pure compounds, the molarity of aluminoxane solutions hereinafter is based on their aluminium content.

The molar ratio of Al in the aluminoxane to the transition metal of the metallocene may be in the range of 1:1 to 2000:1 mol/mol, preferably 10:1 to 1000:1, more preferably 50:1 to 500:1 mol/mol.

Suitable amounts of cocatalyst will be well known to the skilled man.

In an embodiment of the present invention aluminoxane (ii), preferably methylaluminoxane, and an aluminium alkyl compound of the formula $Al(R^6)_3$ with $R^6$ being a linear or branched $C_2$-$C_8$-alkyl group (iii) are used as cocatalyst.

In this case the cocatalyst is preferably a reaction product of (ii) the aluminoxane, preferably methylaluminoxane with (iii) the aluminium alkyl compound, such as tri-isobutyl aluminum, tri-iso-hexyl aluminium, tri-n-octyl aluminum, tri-iso-octyl aluminium and the like. The ratio between methylalumoxane and the aluminium alkyl compound can be between 10:1 and 1:10, preferably 5:1 to 1:5, most preferably 3:1 to 1:3 moles of Al in the methylalumoxane to moles of aluminium of the aluminium alkyl compound. The reaction between methylaluminoxane and the aluminium alkyl compound is carried out by mixing the two components in a suitable solvent, which can be aromatic or aliphatic, at a temperature between -50° to +80°C, preferably between 10° and 50°C, more preferably between 20° and 40°C.

Boron based cocatalysts of interest include boron compounds containing a borate $3^+$ ion, i.e. borate compounds. These compounds generally contain an anion of formula:

$$(Z)_4B^- \qquad (III)$$

where Z is an optionally substituted phenyl derivative, said substituent being a halo-$C_{1-6}$-alkyl or halo group. Preferred options are fluoro or trifluoromethyl. Most preferably, the phenyl group is perfluorinated.

Such ionic cocatalysts preferably contain a non-coordinating anion such as tetrakis(pentafluorophenyl)borate.

Suitable counterions are protonated amine or aniline derivatives or phosphonium ions. These may have the general formula (IV) or (V):

$$NQ_4^+ \text{ (IV) or } PQ_4^+ \qquad (V)$$

where Q is independently H, $C_{1-6}$-alkyl, $C_{3-8}$ cycloalkyl, phenyl$_{C1-6}$-alkylene- or optionally substituted Ph. Optional substituents may be $C_{1-6}$-alkyl, halo or nitro. There may be one or more than one such substituent. Preferred substituted Ph groups include therefore para-substituted phenyl, preferably tolyl or dimethylphenyl.

It is preferred if at least one Q group is H, thus preferred compounds are those of formula:

$$NHQ_3^+ \text{ (VI) or } PHQ_3^+ \qquad (VII)$$

Preferred phenyl-$C_{1-6}$-alkyl-groups include benzyl.

Suitable counterions therefore include: methylammonium, anilinium, dimethylammonium, diethylammonium, N-methylanilinium, diphenylammonium, N,N-dimethylanilinium, trimethylammonium, triethylammonium, tri-n-butylammonium, methyldiphenylammonium, p-bromo-N,N- dimethylanilinium or p-nitro-N,N-dimethylanilinium, especially dimethylammonium or N,N-dimethylanilinium. The use of pyridinium as an ion is a further option.

Phosphonium ions of interest include triphenylphosphonium, triethylphosphonium, diphenylphosphonium, tri(methylphenyl)phosphonium and tri(dimethylphenyl)phosphonium.

A more preferred counterion is trityl ($CPh_3^+$) or analogues thereof in which the Ph group is functionalised to carry one or more alkyl groups. Highly preferred borates of use in the invention therefore comprise the tetrakis(pentafluorophenyl)borate ion.

Preferred ionic compounds which can be used according to the present invention include:

tributylammoniumtetra(pentafluorophenyl)borate,

tributylammoniumtetra(trifluoromethylphenyl)borate,

tributylammoniumtetra-(4-fluorophenyl)borate,

N,N-dimethylcyclohexylammoniumtetrakis-(pentafluorophenyl)borate,

N,N-dimethylbenzylammoniumtetrakis(pentafluorophenyl)borate,

N,N-dimethylaniliniumtetrakis(pentafluorophenyl)borate,

N,N-di(propyl)ammoniumtetrakis(pentafluorophenyl)borate, di(cyclohexyl)ammoniumtetrakis(pentafluorophenyl) borate,

triphenylcarbeniumtetrakis(pentafluorophenyl)borate, ferroceniumtetrakis(pentafluorophenyl)borate.

Preference is given to triphenylcarbeniumtetrakis(pentafluorophenyl) borate,

N,N- dimethylcyclohexylammoniumtetrakis(pentafluorophenyl)borate,

N,N- dimethylbenzylammoniumtetrakis(pentafluorophenyl)borate or

N,N-dimethylaniliniumtetrakis(pentafluorophenyl)borate.

More preferred borates are triphenylcarbeniumtetrakis(pentafluorophenyl) borate and

N,N-dimethylaniliniumtetrakis(pentafluorophenyl)borate.
N,N-dimethylaniliniumtetrakis(pentafluorophenyl)borate is most preferred.

It is further possible to add an aluminium alkyl compound. Suitable aluminium alkyl compounds are compounds of the formula (VIII) $AlR_3$ with R being a linear or branched $C_2$-$C_8$-alkyl group.
Preferred aluminium alkyl compounds are triethylaluminium, tri-isobutylaluminium, tri-isohexylaluminium, tri-n-octylaluminium and tri-isooctylaluminium.
Suitable amounts of cocatalyst will be well known to the skilled man.
The molar ratio of boron to the metal ion of the metallocene may be in the range 0.5:1 to 10:1 mol/mol, preferably 1:1 to 10:1, especially 1:1 to 5:1 mol/mol.
Even more preferred is a molar ratio of boron to the metal ion of the metallocene from 1:1 to less than 2:1 mol/mol, e.g. from 1:1 to 1.8:1 or 1:1 to 1.5:1.
According to the present invention preferably a boron containing cocatalyst, as described above, is used.
The ethylene-1-butene copolymers according to the present invention are suitable to be used as base polymer in hot melt adhesive compositions.
Therefore, also disclosed is a hot melt adhesive composition including at least one ethylene-1-butene copolymer according to the present invention.
Such hot melt adhesive compositions are composed of

A) the base resin, i.e. an ethylene-1-butene copolymer as described above and optionally

B) one or more tackifiers and/or

(C) one or more plasticizers and/or

(D) one or more waxes.

The hot melt adhesive composition may be prepared according to a common method except for including the ethylene-1-butene copolymers according to the present invention as a main component.
The ethylene-1-butene copolymer (A) can be the only component of the hot melt adhesive composition or it can preferably furthermore include one or more tackifiers (B) and/or one or more plasticizers (C) and/or one or more waxes (D).
The tackifier (B) is preferably selected in the group consisting of aliphatic, alicyclic and aromatic resin, and modified material and hydrogenated derivatives thereof, rosin and modified materials and derivatives of rosin, terpenes and modified materials and derivatives of terpenes. The tackifier can be one of the above resins, or can be a combination of more than one of the above resins.
Thus, as used herein, the term "tackifier" include:

(a) aliphatic and cycloaliphatic petroleum hydrocarbon resins having Ring and Ball softening points of from 10°C to 160°C, as determined by ASTM method E28-58T, the latter resins resulting from the polymerization of monomers consisting primarily of aliphatic and/or cycloaliphatic olefins and diolefins; also included are the hydrogenated aliphatic and cycloaliphatic petroleum hydrocarbon resins; examples of such commercially available resins based on a C5 olefin fraction of this type are Piccotac 95 tackifying resin sold by Hercules Corp. and Escoreze 1310LC solid by ExxonMobil Chemical Company;

(b) Aromatic petroleum hydrocarbon resins and the hydrogenated derivatives thereof;

(c) Aliphatic/aromatic petroleum derived hydrocarbon resins and the hydrogenated derivatives thereof;

(d) Aromatic modified cycloaliphatic resins and the hydrogenated derivatives thereof;

(e) Polyterpene resins having a softening point of from about 10°C to about 140°C, the latter polyterpene resins generally resulting from the polymerization of terpene hydrocarbons, such as the mono-terpene known as pinene, in the presence of Friedel-Crafts catalysts at moderately low temperatures; also included are the hydrogenated polyterpene resins;

(f) Copolymers and terpolymers of natural terpenes, e.g. styrene/terpene, $\alpha$-methyl styrene/terpene and vinyl toluene/terpene;

(g) natural and modified rosin such as, for example, gun rosin, wood rosin, tall-oil rosin, distilled rosin, hydrogenated rosin, dimerized rosin and polymerized rosin;

(h) glycerol and pentaerythritol esters of natural and modified rosin, such as, for example, the glycerol ester of pale wood rosin, the glycerol ester of hydrogenated rosin, the glycerol ester of polymerized rosin, the pentaerythritol ester of pale wood rosin, the pentaerythritol ester of hydrogenated rosin, the pentaerythritol ester of tall-oil rosin, and the phenolic modified pentaerythritol ester of rosin;

(i) phenolic-modified terpene resins such as, for example, the resin product resulting from the condensation in an acidic medium of a terpene and a phenol.

Mixtures of two or more of the above described tackifiers may be required for some formulations.

Preferably, the tackifiers can be selected from any of the nonpolar types, which are commercially available. e.g. Eastotac from Eastman Chemical Co., Escorez from Exxon Chemical Co., Wingtack from Goodyear Chemical Co., Hercolite from Hercules Inc., Zonatac from Arizona Chemical Co. Preferred resins are aliphatic petroleum hydrocarbon resins examples of which are based on C5 olefins such as Hercotac 1148 available from Hercules Corp. Most preferred are nonpolar products which are hydrogenated di-cyclo-penta-diene (DCPD) based or aromatically modified derivatives thereof with softening points above 70°C. Examples of such resins are Escoreze 5400 and Escoreze 5600 sold by ExxonMobil Chemical company.

If one or more tackifiers are present as component B in the hot melt adhesive composition of the present invention the amount of component B is in the range of 10 to 70 wt% (based on the total weight of the composition), preferably in the range of 15 to 60 wt%.

The hot melt adhesive composition of the present invention can optionally further comprise plasticizer(s) (C) and/or wax component(s) (D).

The plasticizer(s) which can be utilized in the hot melt adhesive of the present invention provide viscosity control and wetting and specific adhesion to bonded substrates. These plasticizers are selected from a group comprising paraffin oils, chlorinated paraffines, phthalates and adipate esters, oligomers of polypropylene, polybutenes, polyisoprene, hydrogenated polyisoprene and polybutadiene, benzoate esters (e.g. 1,4-cyclohexane dimethanol dibenzoate, glyceryl tribenzoate or pentaerythriol tetrabenzoate), and vegetable and animal oils and derivatives thereof and mixtures of two or more of any of the foregoing. The preferred primary plasticizer is a benzoate or paraffinic oil, a commercial grade of paraffinic oil widely used is available from Witco under the tradename Kaydol oil.

Plasticizers can broadly represent from about 0 to about 60 wt% of the hot melt adhesive of this invention and preferably represent from about 15 to about 25 parts by weight of the hot melt adhesive of this invention.

Wax component(s) can also be optionally utilized in the present invention. Wax components are useful for multi-purpose hot melt adhesives, in that these components offer additional wetting and added creep resistance for foamed elastic attachments. These wax additives can be selected from a group comprised of paraffin wax, microcrystalline wax, Fischer-Tropsch wax, fatty amide waxes, polyethylene wax, ethylene vinyl acetate wax, oxidized polyethylene wax,

hydrogenated castor oil and derivatives thereof, polypropylene wax and mixtures of two or more of any of the foregoing. The preferred waxes for the present invention are selected from a group of oxidized polyethylene waxes, of which a commercial grade is available from Allied Signal under the tradename AC-395. Wax component(s) can represent from 0 to about 10 wt% of the hot melt adhesive of this invention and preferably represent from about 3 to about 7 wt% of the hot melt adhesive of this invention.

Thus the hot melt adhesive may be composed of

A) at least one metallocene catalyzed ethylene based plastomers being a copolymer of ethylene and 1-butene as defined above in an amount of 10 to 80 wt% and

(B) one or more tackifiers in an amount of 10 to 70 wt% and

(C) one or more plasticizers in an amount of 0 to 60 wt% and/or

(D) one or more waxes. in an amount of 0 to 10 wt%, all based on the overall weight of the hot melt adhesive.

If necessary, the hot melt adhesive composition according to the present invention may further contain various additives. Examples of the various additives include a stabilizer and fine particle filler.

The "stabilizer" is blended so as to improve stability of the hot melt adhesive by preventing decrease in molecular weight, gelation, coloration, and generation of odor of the hot melt adhesive due to heat, and there is no particular limitation on the stabilizer as long as the objective hot melt adhesive of the present invention can be obtained. Examples of the "stabilizer" include an antioxidant and an ultraviolet absorber.

The "ultraviolet absorber" is used so as to improve light resistance of the hot melt adhesive. The "antioxidant" is used so as to prevent oxidation degradation of the hot melt adhesive. The antioxidant and ultraviolet absorber are commonly used in disposable products and can be used without particular limitation as long as the below-mentioned objective disposable products can be obtained.

Examples of the antioxidant include a phenol-based antioxidant, a sulfur-based antioxidant and a phosphorus-based antioxidant. Examples of the ultraviolet absorber include a benzotriazole-based ultraviolet absorber and a benzophenone-based ultraviolet absorber. It is also possible to add a lactone-based stabilizer. These additives can be used alone, or in combination.

The hot melt adhesive for disposable products of the present invention can further include fine particle filler. Commonly used fine particle filler may be used, and there is no particular limitation as long as the objective hot melt adhesive of the present invention can be obtained. Examples, of the "fine particle filler" include mica, calcium carbonate, kaolin, talc, titanium oxide, diatomaceous earth, urea-based resin, styrene beads, calcined clay, starch and the like. These particles preferably have a spherical shape, and there is no particular limitation on the size (diameter in case of a spherical shape).

The hot melt adhesive composition of the present invention can be produced by blending the component (A) with optional component (B), blending optionally the components (C) and/or the component (D), if necessary adding the various additives, and melting the mixture with heating, followed by mixing. Specifically, the hot melt adhesive can be produced by charging the above components in a melt-mixing vessel equipped with a stirrer, followed by heating and mixing.

## Experimental Part

### 1. Methods

The measurement methods apply to the parameters mentioned in the description of the invention and the examples below.

*a) Melt Flow Rate*

The melt flow rate (MFR) was determined according to ISO 1133 and is indicated in g/10 min. The MFR is an indication of the melt viscosity of the polymer. The MFR was determined at 190 °C for polyethylene with a load of 2.16 kg ($MFR_2$).

*b) Density*

The density of the copolymer was measured according to ISO 1183 (method A) on compression moulded

specimen prepared according to EN ISO 1872-2 (Feb 2007) and is given in $kg/m^3$.

*c)* Determination of the Molecular weight averages, molecular weight distribution

Molecular weight averages (Mz, Mw and Mn), Molecular weight distribution (MWD) and its broadness, described by polydispersity index, PDI = Mw/Mn (wherein Mn is the number average molecular weight and Mw is the weight average molecular weight) were determined by Gel Permeation Chromatography (GPC) according to ISO 16014-1:2003, ISO 16014-2:2003, ISO 16014-4:2003 and ASTM D 6474-12 using the following formulas:

$$M_n = \frac{\sum_{i=1}^{N} A_i}{\sum_{i=1}^{N}(A_i/M_i)} \quad (1)$$

$$M_w = \frac{\sum_{i=1}^{N}(A_i x\, M_i)}{\sum_{i=1}^{N} A_i} \quad (2)$$

$$M_z = \frac{\sum_{i=1}^{N}(A_i\, x\, M_i^2)}{\sum_{i=1}^{N}(A_i/M_i)} \quad (3)$$

For a constant elution volume interval $\Delta V_i$, where $A_i$, and $M_i$ are the chromatographic peak slice area and polyolefin molecular weight (MW), respectively associated with the elution volume, $V_i$, where N is equal to the number of data points obtained from the chromatogram between the integration limits.

A high temperature GPC instrument, equipped with a multiple band infrared detector model IR5 (PolymerChar, Valencia, Spain), equipped with 3 x Agilent-PLgel Olexis and 1x Agilent-PLgel Olexis Guard columns was used. As the solvent and mobile phase 1,2,4-trichlorobenzene (TCB) stabilized with 250 mg/L 2,6-Di tert butyl-4-methyl-phenol) was used. The chromatographic system was operated at 160 °C at a constant flow rate of 1 mL/min. 200 μL of sample solution was injected per analysis. Data collection was performed by using PolymerChar GPC-one software.

The column set was calibrated using universal calibration (according to ISO 16014-2:2003) with 19 narrow MWD polystyrene (PS) standards in the range of 0,5 kg/mol to 11 500 kg/mol. The PS standards were dissolved at room temperature over several hours. The conversion of the polystyrene peak molecular weight to polyethylene molecular weights is accomplished by using the Mark Houwink equation and the following Mark Houwink constants:

$$K_{PS} = 19 \times 10^{-3}\ mL/g,\quad \alpha_{PS} = 0.655$$

$$K_{PE} = 39 \times 10^{-3}\ mL/g,\quad \alpha_{PE} = 0.725$$

A third order polynomial fit was used to fit the calibration data.

All samples were prepared in the concentration range of 0.5 to 1 mg/ml and dissolved at 160°C for 3 hours under continuous gentle shaking.

d) Quantitative nuclear-magnetic resonance (NMR) spectroscopy was used to quantify the comonomer content of the copolymers.

Quantitative $^{13}C\{^1H\}$ NMR spectra recorded in the molten-state using a Bruker Avance III 500 NMR spectrometer operating at 500.13 and 125.76 MHz for $^1H$ and $^{13}C$ respectively. All spectra were recorded using a $^{13}C$ optimised 7 mm magic-angle spinning (MAS) probehead at 150°C using nitrogen gas for all pneumatics. Approximately 200 mg of material was packed into a 7 mm outer diameter zirconia MAS rotor and spun at 4 kHz. This setup was chosen primarily for the high sensitivity needed for rapid identification and accurate quantification (Klimke, K., Parkinson, M., Piel, C., Kaminsky, W., Spiess, H.W., Wilhelm, M., Macromol. Chem. Phys. 2006;207:382., Parkinson, M., Klimke, K., Spiess, H.W., Wilhelm, M., Macromol. Chem. Phys. 2007;208:2128., Castignolles, P., Graf, R., Parkinson, M., Wilhelm, M., Gaborieau, M., Polymer 50 (2009) 2373). Standard single-pulse excitation was employed utilising the transient NOE at short recycle delays of 3s (Pollard, M., Klimke, K., Graf, R., Spiess, H.W., Wilhelm, M., Sperber, O., Piel, C., Kaminsky, W., Macromolecules

2004;37:813., Klimke, K., Parkinson, M., Piel, C., Kaminsky, W., Spiess, H.W., Wilhelm, M., Macromol. Chem. Phys. 2006;207:382.) and the RS-HEPT decoupling scheme (Filip, X., Tripon, C., Filip, C., J. Mag. Resn. 2005, 176, 239, Griffin, J.M., Tripon, C., Samoson, A., Filip, C., and Brown, S.P., Mag. Res. in Chem. 2007 45, S1, S198). A total of 1024 (1k) transients were acquired per spectrum.

Quantitative $^{13}C\{^{1}H\}$ NMR spectra were processed, integrated and quantitative properties determined using custom spectral analysis automation programs. All chemical shifts are internally referenced to the bulk methylene signal ($\delta$+) at 30.00 ppm (J. Randall, Macromol. Sci., Rev. Macromol. Chem. Phys. 1989, C29, 201).

Characteristic signals corresponding to the incorporation of 1-butene were observed (J. Randall, Macromol. Sci., Rev. Macromol. Chem. Phys. 1989, C29, 201.) and all contents calculated with respect to all other monomers present in the polymer with the limit of quantification being 0.2 mol% of butene.

Characteristic signals resulting from isolated 1-butene incorporation i.e. EEBEE comonomer sequences, were observed. Isolated 1-butene incorporation was quantified using the integral of the signal at 39.8 ppm assigned to the *B2 sites, accounting for the number of reporting sites per comonomer:

$$B = I_{*B2}$$

When characteristic signals resulting from consecutive 1-butene incorporation i.e. EBBE comonomer sequences were observed, such consecutive 1-butene incorporation was quantified using the integral of the signal at 39.3 ppm assigned to the $\alpha\alpha$B2B2 sites accounting for the number of reporting sites per comonomer:

$$BB = 2 * I_{\alpha\alpha B2B2}$$

When characteristic signals resulting from non consecutive 1-butene incorporation i.e. EBEBE comonomer sequences were also observed, such non-consecutive 1-butene incorporation was quantified using the integral of the signal at 24.7 ppm assigned to the $\beta\beta$B2B2 sites accounting for the number of reporting sites per comonomer:

$$BEB = 2 * I_{\beta\beta B2B2}$$

Due to the overlap of the *B2 and *$\beta$B2B2 sites of isolated (EEBEE) and non-consecutively incorporated (EBEBE) 1-butene respectively the total amount of isolated 1-butene incorporation is corrected based on the amount of non-consecutive 1-butene present:

$$B = I_{*B2} - 2 * I_{\beta\beta B2B2}$$

With no other signals indicative of other comonomer sequences, i.e. butene chain initiation, observed the total 1-butene comonomer content was calculated based solely on the amount of isolated (EEBEE), consecutive (EBBE) and non-consecutive (EBEBE) 1-butene comonomer sequences:

$$B_{total} = B + BB + BEB$$

Characteristic signals resulting from saturated end-groups were observed. The content of such saturated end-groups was quantified using the average of the integral of the signals at 22.8 and 32.2 ppm assigned to the 2s and 3s sites respectively:

$$S = (1/2)*(I_{2S} + I_{3S})$$

The relative content of ethylene was quantified using the integral of the bulk methylene ($\delta$+) signals at 30.00 ppm:

$$E = (1/2)*I_{\delta+}$$

The total ethylene comonomer content was calculated based the bulk methylene signals and accounting for ethylene units present in other observed comonomer sequences or end-groups:

$$E_{total} = E + (5/2)*B + (7/2)*BB + (9/2)*BEB + (3/2)*S$$

The total mole fraction of 1-butene in the polymer was then calculated as:

$$fB = B_{total} / ( E_{total} + B_{total} )$$

The total comonomer incorporation of 1-butene in mole percent was calculated from the mole fraction in the usual manner:

$$B [mol\%] = 100 * fB$$

The total comonomer incorporation of 1-butene in weight percent was calculated from the mole fraction in the standard manner:

$$B [wt\%] = 100 * ( fB * 56.11) / ( (fB * 56.11) + ((1 - fB) * 28.05) )$$

*e) Unsaturation*

Quantitative nuclear-magnetic resonance (NMR) spectroscopy was used to quantify the content of unsaturated groups present in the polymers.

Quantitative $^{1}$H-NMR spectra recorded in the solution-state using a Bruker Avance III 400 NMR spectrometer operating at 400.15 MHz. All spectra were recorded using a $^{13}$C optimised 10 mm selective excitation probehead at 125°C using nitrogen gas for all pneumatics. Approximately 200 mg of material was dissolved in *1,2*-tetrachloroethane-*d2* (TCE-*d2*) using approximately 3 mg of Hostanox 03 (CAS 32509-66-3) as stabiliser. Standard single-pulse excitation was employed utilising a 30 degree pulse, a relaxation delay of 10 s and 10 Hz sample rotation. A total of 128 transients were acquired per spectra using 4 dummy scans. This setup was chosen primarily for the high resolution needed for unsaturation quantification and stability of the vinylidene groups. All chemical shifts were indirectly referenced to TMS at 0.00 ppm using the signal resulting from the residual protonated solvent at 5.95 ppm.

Characteristic signals corresponding to the presence of terminal aliphatic vinyl groups (R-CH=CH2) were observed and the amount quantified using the integral of the two coupled inequivalent terminal CH2 protons (Va and Vb) at 4.95, 4.98 and 5.00 and 5.05 ppm accounting for the number of reporting sites per functional group:

$$Nvinyl = IVab / 2$$

When characteristic signals corresponding to the presence of internal vinylidene groups (RR'C=CH2) were observed the amount is quantified using the integral of the two CH2 protons (D) at 4.74 ppm accounting for the number of reporting sites per functional group:

$$Nvinylidene = ID / 2$$

When characteristic signals corresponding to the presence of internal cis- vinylene groups (E-RCH=CHR'), or related structure, were observed the amount is quantified using the integral of the two CH protons (C) at 5.39 ppm accounting for the number of reporting sites per functional group:

$$Ncis = IC / 2$$

When characteristic signals corresponding to the presence of internal trans- vinylene groups (Z-RCH=CHR') were observed the amount is quantified using the integral of the two CH protons (T) at 5.45 ppm accounting for the number of reporting sites per functional group:

$$Ntrans = IT / 2$$

When characteristic signals corresponding to the presence of internal trisubstituted-vinylene groups (RCH=CHR'R"), or related structure, were observed the amount is quantified using the integral of the CH proton (Tris) at

5.14 ppm accounting for the number of reporting sites per functional group:

$$Ntris = ITris$$

The Hostanox 03 stabiliser was quantified using the integral of multiplet from the aromatic protons (A) at 6.92, 6.91, 6.69 and at 6.89 ppm and accounting for the number of reporting sites per molecule:

$$H = IA / 4$$

As is typical for unsaturation quantification in polyolefins the amount of unsaturation was determined with respect to total carbon atoms, even though quantified by $^1H$ NMR spectroscopy. This allows direct comparison to other microstructure quantities derived directly from $^{13}C$ NMR spectroscopy.

The total amount of carbon atoms was calculated from integral of the bulk aliphatic signal between 2.85 and -1.00 ppm with compensation for the methyl signals from the stabiliser and carbon atoms relating to unsaturated functionality not included by this region:

$$NCtotal = (Ibulk - 42*H) / 2 + 2*Nvinyl + 2*Nvinylidene + 2*Ncis + 2*Ntrans + 2*Ntris$$

The content of unsaturated groups (U) was calculated as the number of unsaturated groups in the polymer per thousand total carbons (kCHn):

$$U = 1000*N / NCtotal$$

The total amount of unsaturated group was calculated as the sum of the individual observed unsaturated groups and thus also reported with respect per thousand total carbons:

$$Utotal = Uvinyl + Uvinylidene + Ucis + Utrans + Utris$$

The relative content of a specific unsaturated group (U) is reported as the fraction or percentage of a given unsaturated group with respect to the total amount of unsaturated groups:

$$[U] = Ux / Utotal$$

Further information can be found in the following references:

He, Y., Qiu, X, and Zhou, Z., Mag. Res. Chem. 2010, 48, 537-542.

Busico, V. et. al. Macromolecules, 2005, 38 (16), 6988-6996

*e) Full Width at half Maximum (FWHM) of the crystallisation peak*

Differential Scanning Calorimetry (DSC) experiments were run on a TA Instruments Q200 device calibrated with Indium, Zinc, and Tin according to ISO 11357/1. The measurements were run under nitrogen atmosphere (50 mL min-1) on 5±1 mg samples in a heat/cool/heat cycle with a scan rate of 10 °C/min between -50 °C and 180 °C according to ISO 11357-3 for the first and second heating runs and the cooling run. The latter was integrated between -20°C and the end of the crystallization peak. The FWHM was calculated on the cooling thermogram after baseline subtraction, as the temperature range between the two temperatures at which the peak reached at least half of the maximum value of the heat flow.

*f) Chemical composition distribution (CCD)*

Thermal gradient interaction chromatography (TGIC) was used to determine the Chemical composition distribution (CCD).

Interaction chromatography experiments were performed using a crystallisation elution fractionation instrument (CEF) constructed by Polymer Char (Valencia, Spain) equipped with an infrared detector IR5. A Hypercarb column (Hypercarb®, Thermo Scientific, Dreieich, Germany) with 100 × 4.6 mm internal diameter packed with porous graphite particles having a particle diameter of 5 μm (making a surface area of 120 m2g-1) and pore size of 250 Å was used for all HT-TGIC experiments. The detector compartment and the injection loops and valves were at 160 °C.

A concentration of 1 - 1.2 mgmL-1 was used (approximately 8 - 10 mg in 8 mL) with 100 μL of each sample being injected. The samples were dissolved at 160°C for 90 minutes each.

Thermal gradient interaction chromatography (TGIC) separations were achieved by using ortho-Dichlorobenzene (ODCB) as mobile phase and solvent.

After loading the sample on the hypercarb column, the flow was stopped and the oven with the hypercarb column was stabilized for 15 minutes at 160°C. After the column compartment was cooled down to 40°C in 10 minutes and

stabilised for 5 minutes at 40°C. During the elution process, a flow rate of 0.5 ml/min was applied. In the first 10 minutes of elution the temperature was kept at 40°C and afterwards increased in a continuous way to 170°C using a heating rate of 1.7 °C/min.

From the obtained elution profile, the peak width at 10% of the peak maximum was determined in the unit mL.

## 2. Examples

As catalyst (Phenyl)(cyclohexyl)methylene(cyclopentadienyl)(2,7-di-*tert*- butylfluoren-9-yl)hafnium dimethyl), produced according to WO2018/108918 was used.

As cocatalyst N,N-Dimethylanilinium Tetrakis(pentafluorophenyl)borate (AB) (CAS 118612-00-3) was used, commercially available from Boulder.

Polymerization was done with Borealis proprietor solution polymerization technology, in the presence of metallocene catalyst (phenyl)(cyclohexyl) methylene (cyclopentadienyl) (2,7-di-tert-butylfluorenyl) hafnium dimethyl and N,N-Dimethylanilinium Tetrakis(pentafluorophenyl)borate (AB) (CAS 118612-00-3) as cocatalyst.

The polymerization example was done in the TU Darmstadt solution polymerization tool. Reactor volume was 0.26lt. Reaction pressure and temperature were 130 bar and 150 °C, respectively. Catalyst, borate (AB), monomer (ethylene), comonomer (butene), scavenger (TEAL) and solvent (hexane), were continuously fed into the reactor.

For the inventive example IE1, the feeds were:

Ethylene: 30g/h

Butene: 0.63ml/min (fed at 10°C at pump heads)

Catalyst: 1.25ml/min (cat. conc.: 0.14g/lt)

Borate: 1.25ml/min (bor. conc.: 0.196g/lt)

TEAL: 2.75ml/min (TEAL conc.: 2.5mmol/lt)

Hexane: 9ml/min

Ethene feed: 30 g/h

Butene feed (fed at 10°C at pump heads): 0.63 ml/min

Table 1: Properties of Inventive Examples IE1 and CE1 to CE2

| | | IE1 | CE1 (DOW Affinity GA 1950) | Queo 8230 |
|---|---|---|---|---|
| density | [kg/m$^3$] | 880 | 874 | 883 |
| $MFR_2$ | g/10 min | 1337 | 500 | 30 |
| Mn | g/mol | 6285 | 10250 | 16100 |
| Mw | g/mol | 15400 | 22300 | 43500 |
| Mz | g/mol | 51000 | 36750 | 80050 |
| Mw/Mn | | 2.45 | 2.17 | 2.7 |
| Mz/Mw | | 3.3 | 1.6 | 1.8 |
| Comonomer content | wt% | 21.9 (butene) | 33 (octene) | 24.5 (octene) |
| vinyl | 100kCHn | 2.6 | 4.2 | 21.8 |
| Vinylene | 100kCHn | 70.4 | 19.4 | 22.0 |
| Vinylidene | 100kCHn | 34.4 | 16.5 | 27.6 |
| Tris | 100kCHn | 17.8 | 0 | 34.2 |
| total | 100kCHn | 125.2 | 40.1 | 105.6 |

(continued)

| | | IE1 | CE1 (DOW Affinity GA 1950) | Queo 8230 |
|---|---|---|---|---|
| FWHM | °C | 52.8 | 4.41 | 4.91 |
| PWPM | | 18.3 | 16.6 | 10.0 |

## Claims

**1.** An ethylene-1-butene-copolymer having

i) a density measured according to ISO1183 in the range of 860 to 890 kg/m$^3$,
ii) a melt flow rate, $MFR_2$, measured according to ISO1133 at 190°C and a load of 2.16 kg, in the range of 1000 to 2000 g/10 min,
iii) a molecular weight distribution, MWD, measured by Gel Permeation Chromatography, in the range of 1.5 to 3.0 and
iv) an unsaturation profile being **characterized by**

0.5 to 10.0 vinyl unsaturation units /100,000 C atoms measured by $^1$H-NMR as described in the experimental section,
20.0 to 50.0 vinylidene unsaturation units /100,000 C atoms measured by $^1$H-NMR as described in the experimental section,
50.0 to 100.0 vinylene unsaturation units /100,000 C atoms measured by $^1$H-NMR as described in the experimental section,
5.5 to 25.0 trisubstituted unsaturation units / 100,000 C atoms measured by $^1$H-NMR as described in the experimental section, and
76 to 185 total unsaturation units /100,000 C atoms, wherein the total unsaturation units/100,000 C atoms is the sum of vinyl unsaturation units /100,000 C atoms, vinylidene unsaturation units /100,000 C atoms, vinylene unsaturation units /100,000 C atoms and trisubstituted unsaturation units /100,000 C atoms, all measured by $^1$H-NMR as described in the experimental section.

**2.** The ethylene-1-butene-copolymer according to claim 1, wherein the ethylene-1-butene copolymer has

a number average molecular weight (Mn), determined by Gel Permeation Chromatography, of below 10000 g/mol, preferably in the range of 4000 to 9500 g/mol, more preferably in the range of 5000 to 8000 g/mol and/or a weight average molecular weight (Mw) determined by Gel Permeation Chromatography in a range of 10000 to 25000 g/mol, preferably 12000 to 22000 g/mol, and more preferably 13000 to 20000 g/mol.

**3.** The ethylene-1-butene-copolymer according to claim 1 or 2, wherein the ethylene-1-butene copolymer has a ratio Mz/Mw in the range of 2.2 to 4.5, preferably 2.5 to 4.0 and more preferably 2.8 to 3.8, Mz and Mw being determined by Gel Permeation Chromatography.

**4.** The ethylene-1-butene-copolymer according to any one of the preceding claims, wherein the ethylene-1-butene copolymer has
a Full Width at Half maximum (FWHM) of the crystallization peak measured according to ISO 11357-3 in the range of 30 to 80°C, preferably 40 to 70°C and more preferably 45 to 60°C.

**5.** The ethylene-1-butene-copolymer according to any one of the preceding claims, wherein the ethylene-1-butene copolymer has a chemical composition distribution (CCD) **characterized by** a Peak width at 10% of Peak maximum (PWPM) in the range
of 10 to 30°C, preferably 12 to 25°C and more preferably 15 to 20°C.

**6.** The ethylene-1-butene-copolymer according to any one of the preceding claims, wherein the ethylene-1-butene copolymer has

i) a density measured according to ISO1183 in the range of 870 to 888 kg/m$^3$, preferably 875 to 885 kg/m$^3$, and
ii) a melt flow rate, $MFR_2$, measured according to ISO1133 at 190°C and a load of 2.16 kg, in the range of 1100 to

1800 g/10 min, preferably 1200 to 1500 g/10 min.

**7.** The ethylene-1-butene-copolymer according to any one of the preceding claims, wherein the ethylene-1-butene copolymer has

iv) an unsaturation profile being **characterized by**
1.0 to 8.0, preferably 1.5 to 5.0 vinyl unsaturation units /100,000 C atoms measured by $^1$H-NMR as described in the experimental section,
25.0 to 45.0, preferably 28.0 to 40.0 vinylidene unsaturation units /100,000 C atoms measured by $^1$H-NMR as described in the experimental section,
55.0 to 90.0, preferably 60.0 to 80.0 vinylene unsaturation units /100,000 C atoms measured by $^1$H-NMR as described in the experimental section,
8.0 to 22.0, preferably 10.0 to 20.0 trisubstituted unsaturation units / 100,000 C atoms measured by $^1$H-NMR as described in the experimental section, and
88.0 to 155.0, preferably 99.5 to 145.0 total unsaturation units /100,000 C atoms, wherein the total unsaturation units /100,000 C atoms is the sum of vinyl unsaturation units /100,000 C atoms, vinylidene unsaturation units /100,000 C atoms, vinylene unsaturation units /100,000 C atoms and trisubstituted unsaturation units /100,000 C atoms, all measured by $^1$H-NMR as described in the experimental section.

**8.** A solution polymerization process for producing the ethylene-1-butene copolymer according to claims 1 to 7,

using a metallocene complex of formula (I)

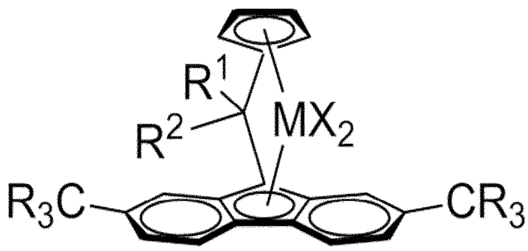

wherein
M is Hafnium,
R are the same or different from each other and can be a saturated linear or branched $C_1$ to $C_{10}$ alkyl, preferably all R are the same and are a linear or branched $C_1$ to $C_3$ alkyl, more preferably all R are a $C_1$ alkyl group,
$R^1$ is an unsubstituted $C_6$ to $C_{10}$ aryl, preferably phenyl and
$R^2$ is a $C_4$ to $C_{20}$ cycloalkyl group or a $C_4$ to $C_6$ alkenyl groups,
X is a $C_1$ to $C_6$ alkyl, preferably methyl,
and a cocatalyst.

**9.** The solution polymerization process according to claim 8, wherein the process is conducted at a polymerization temperature of higher than 100°C, preferably at a polymerization temperature of at least 110°C, more preferably of at least 140°C, whereby the polymerization temperature can be up to 250°C and

a pressure from 50 to 300 bar, preferably from 60 to 250 bar and more preferably from 70 to 200 bar and
in the presence of a hydrocarbon solvent, which is preferably a $C_{5-12}$-hydrocarbon which may be unsubstituted or substituted by $C_{1-4}$ alkyl group selected from pentane, methyl pentane, hexane, heptane, octane, cyclohexane, methylcyclohexane and hydrogenated naphtha, more preferably, a unsubstituted $C_{6-10}$-hydrocarbon.

**10.** The solution polymerization process according to claim 8 or 9, wherein the process is a high temperature solution process preferably at a temperature greater than 100°C, in the presence of a metallocene catalyst system, the metallocene catalyst system comprising, or consisting of,

(i) at least one metallocene complex of formula (I) as defined in claim 8,
(ii) an aluminoxane cocatalyst and/or an boron containing cocatalyst, and
(iii) optionally an aluminium alkyl compound $Al(R^6)_3$, with $R^6$ being a linear or branched $C_2$-Cs-alkyl group.

**11.** The solution polymerization process according to anyone of the preceding claims 8 to 9, wherein the at least one metallocene complex of formula (I) is a metallocene complex of formula (Ia)

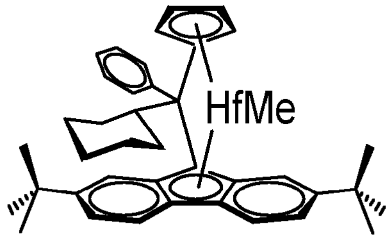

(Ia)

((Phenyl)(cyclohexyl)methylene(cyclopentadienyl)(2,7-di-tert-butylfluoren-9-yl)hafnium dimethyl), or the at least one metallocene complex of formula (I) is a metallocene complex of formula (Ib)

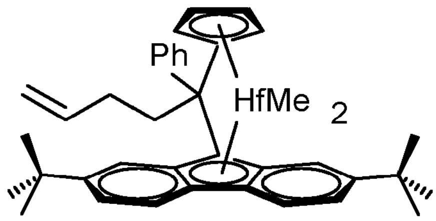

(Ib)

((Phenyl)(3-buten-1-yl)methylene(cyclopentadienyl) (2,7-di-tert-butylfluoren-9-yl) hafnium dimethyl), preferably (Phenyl)(cyclohexyl)methylene(cyclopentadienyl)(2,7-di-tert-butylfluoren-9-yl)hafnium dimethyl) and the
cocatalyst is a boron containing cocatalyst.

**12.** Use of the ethylene-1-butene copolymer according to claims 1 to 7 as base resin for hot melt adhesives

**13.** Hot melt adhesives composition comprising at least one ethylene-1-butene copolymer according to claims 1 to 7 and optionally

B) one or more tackifiers and/or
(C) one or more plasticizers and/or
(D) one or more waxes.

**14.** Hot melt adhesive composition according to claim 14, wherein the composition is composed of

A) at least one metallocene catalyzed ethylene based plastomers being a copolymer of ethylene and 1-butene according to claims 1 to 7 in an amount of 10 to 80 wt% and
(B) one or more tackifiers in an amount of 10 to 70 wt% and
(C) one or more plasticizers in an amount of 0 to 60 wt% and/or
(D) one or more waxes. in an amount of 0 to 10 wt%, all based on the overall weight of the hot melt adhesive.

Europäisches Patentamt
European Patent Office
Office européen des brevets

# EUROPEAN SEARCH REPORT

Application Number
EP 25 15 0381

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2021/095062 A1 (PARK IN SUNG [KR] ET AL) 1 April 2021 (2021-04-01)<br>* examples 4-8; tables 1-3 *<br>* claim 1 *<br>----- | 1-14 | INV.<br>C08F210/16<br>C08F210/08<br>C08F4/6592<br>C09J123/08 |
| A | US 2016/257862 A1 (YOSHIMOTO KOYA [JP] ET AL) 8 September 2016 (2016-09-08)<br>* production example 5, polymer E, table 1 *<br>* example 5; table 2 *<br>* claims 1,7 *<br>* paragraph [0006] *<br>----- | 1-14 | |
| A | US 2021/108006 A1 (FAIT ANNA [AT] ET AL) 15 April 2021 (2021-04-15)<br>* paragraph [0120] *<br>* par. 186-237, catalysts C-1, C-2, C-3 *<br>* examples IE1-IE4; table 1 *<br>* claims 1-15 *<br>----- | 1-14 | |
| A | WO 2022/218903 A1 (BOREALIS AG [AT]) 20 October 2022 (2022-10-20)<br>* page 23 - page 24,; examples IE1-IE13; tables 1-4 *<br>* page 4, line 13 - line 19 *<br>* claims 1,4,6,8-10,14 *<br>----- | 1-14 | TECHNICAL FIELDS SEARCHED (IPC)<br>C08F<br>C09J |

The present search report has been drawn up for all claims

1

| Place of search | Date of completion of the search | Examiner |
|---|---|---|
| Munich | 17 June 2025 | Gamb, Véronique |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 25 15 0381

This annex lists the patent family members relating to the patent documents cited in the above-mentioned European search report.
The members are as contained in the European Patent Office EDP file on
The European Patent Office is in no way liable for these particulars which are merely given for the purpose of information.

17-06-2025

| Patent document cited in search report | Publication date | Patent family member(s) | Publication date |
|---|---|---|---|
| US 2021095062 A1 | 01-04-2021 | CN 112020521 A | 01-12-2020 |
| | | EP 3770188 A1 | 27-01-2021 |
| | | JP 7187097 B2 | 12-12-2022 |
| | | JP 2021518879 A | 05-08-2021 |
| | | KR 20190127592 A | 13-11-2019 |
| | | US 2021095062 A1 | 01-04-2021 |
| | | WO 2019212302 A1 | 07-11-2019 |
| US 2016257862 A1 | 08-09-2016 | CN 105518096 A | 20-04-2016 |
| | | EP 3059291 A1 | 24-08-2016 |
| | | JP 6161716 B2 | 12-07-2017 |
| | | JP WO2015056787 A1 | 09-03-2017 |
| | | US 2016257862 A1 | 08-09-2016 |
| | | WO 2015056787 A1 | 23-04-2015 |
| US 2021108006 A1 | 15-04-2021 | CN 110475793 A | 19-11-2019 |
| | | EP 3601385 A1 | 05-02-2020 |
| | | ES 2945666 T3 | 05-07-2023 |
| | | JP 7221875 B2 | 14-02-2023 |
| | | JP 2020512461 A | 23-04-2020 |
| | | KR 20190129973 A | 20-11-2019 |
| | | US 2021108006 A1 | 15-04-2021 |
| | | WO 2018178152 A1 | 04-10-2018 |
| WO 2022218903 A1 | 20-10-2022 | BR 112023021116 A2 | 12-12-2023 |
| | | CA 3216377 A1 | 20-10-2022 |
| | | CN 117157333 A | 01-12-2023 |
| | | EP 4323414 A1 | 21-02-2024 |
| | | ES 3019307 T3 | 20-05-2025 |
| | | KR 20230170080 A | 18-12-2023 |
| | | PT 4323414 T | 08-04-2025 |
| | | US 2024199776 A1 | 20-06-2024 |
| | | WO 2022218903 A1 | 20-10-2022 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2017102702 A1
- EP 0912646 A1
- US 5530054 A1
- US 20100276057 A1
- WO 2018108917 A
- WO 2018108918 A


### Non-patent literature cited in the description


- **KLIMKE, K.** ; **PARKINSON, M.** ; **PIEL, C.** ; **KAMINSKY, W.** ; **SPIESS, H.W.** ; **WILHELM, M.** *Macromol. Chem. Phys.*, 2006, vol. 207, 382
- **PARKINSON, M.** ; **KLIMKE, K.** ; **SPIESS, H.W.** ; **WILHELM, M.** *Macromol. Chem. Phys.*, 2007, vol. 208, 2128
- **CASTIGNOLLES, P.** ; **GRAF, R.** ; **PARKINSON, M.** ; **WILHELM, M.** ; **GABORIEAU, M.** *Polymer*, 2009, vol. 50, 2373
- **POLLARD, M.** ; **KLIMKE, K.** ; **GRAF, R.** ; **SPIESS, H.W.** ; **WILHELM, M.** ; **SPERBER, O.** ; **PIEL, C.** ; **KAMINSKY, W.** *Macromolecules*, 2004, vol. 37, 813
- **FILIP, X.** ; **TRIPON, C.** ; **FILIP, C.** *J. Mag. Resn.*, 2005, vol. 176, 239
- **GRIFFIN, J.M.** ; **TRIPON, C.** ; **SAMOSON, A.** ; **FILIP, C.** ; **BROWN, S.P.** *Mag. Res. in Chem.*, 2007, vol. 45 (S1), S198
- *J. Randall, Macromol. Sci., Rev. Macromol. Chem. Phys.*, 1989, vol. C29, 201
- **J. RANDALL**. *Macromol. Sci., Rev. Macromol. Chem. Phys.*, 1989, vol. C29, 201
- *CHEMICAL ABSTRACTS*, 32509-66-3
- **HE, Y.** ; **QIU, X** ; **ZHOU, Z.** *Mag. Res. Chem.*, 2010, vol. 48, 537-542
- **BUSICO, V.** *Macromolecules*, 2005, vol. 38 (16), 6988-6996
- *CHEMICAL ABSTRACTS*, 118612-00-3